# EUROPEAN PATENT SPECIFICATION

(11) **EP 1 124 898 B1**
(45) Date of publication and mention of the grant of the patent: **15.12.2004**
(21) Application number: 99970676.5
(22) Date of filing: 21.10.1999
(51) Int. Cl.: C08L 23/08, C08L 67/02, C08L 101/00, C08K 5/09, A63B 37/00

(54) **HIGHLY-RESILIENT THERMOPLASTIC ELASTOMER COMPOSITIONS**
HOCHELASTISCHE THERMOPLASTISCHE ELASTOMERMISCHUNGEN
COMPOSITIONS ELASTOMERES THERMOPLASTIQUES TRES ELASTIQUES

(30) Priority: 21.10.1998 US 105065 P; 21.10.1998 US 105232 P; 22.10.1998 US 105181 P; 22.10.1998 US 105193 P
(43) Date of publication of application: 22.08.2001
(73) Proprietor: E.I. DU PONT DE NEMOURS AND COMPANY, Wilmington, Delaware 19898 (US)
(72) Inventor: STATZ, Robert, Joseph, Kennett Square, PA 19348 (US); CHEN, John, C., Hockessin, DE 19707 (US); HAGMAN, John, Francis, Wilmington, DE 19810 (US)
(74) Representative: Abitz, Walter, Dr.-Ing.
(86) International application number: PCT/US1999/024700
(87) International publication number: WO 2000/023519

(56) References cited:
- EP-A- 0 339 743
- WO-A-92/12206
- WO-A-98/03565
- WO-A-98/46671
- BE-A- 699 171
- GB-A- 2 164 342
- GB-A- 2 168 059
- US-A- 3 384 612
- US-A- 5 306 760
- CHEMICAL ABSTRACTS, vol. 129, no. 12, 21 September 1998 (1998-09-21) Columbus, Ohio, US; abstract no. 149996, XP002131233 & JP 10 219053 A (YOKOHAMA RUBBER CO.) 18 August 1998 (1998-08-18)
- DATABASE WPI Section Ch, Week 199810 Derwent Publications Ltd., London, GB; Class A23, AN 1998-103921 XP002131234 & JP 09 221581 A (TEIJIN LTD), 26 August 1997 (1997-08-26)
- ANTONY, PRINCE ET AL.: PLASTICS, RUBBER AND COMPOSITES PROCESSING AND APPLICATIONS, vol. 26, no. 7, 1997, pages 311-317, XP000864417

## Description

### Field of the Invention

The invention relates to highly-resilient thermoplastic elastomer compositions, their manufacture and their use as a substitute for thermoset and thermoplastic materials, particularly in the manufacture of one-, two-, three-piece, and multi-layered golf balls, particularly to thermoplastic polymer blend compositions useful therein. These compositions are also useful as foamed materials in footware and other sport balls such as softballs.

### Description of Related Art

Typically, thermoset materials such as polybutadiene rubber, cross-linked EVA, cross-linked SBS, and cross-linked urethanes have been used in applications where properties such as resilience, durability, and low hardness are needed. For example, polybutadiene rubber has traditionally been used in the cores and centers of golf balls.

There currently exist several types of premium golf balls, particularly three-piece balls, two-piece balls and multi-layered balls. "Three-piece" balls typically have a spherical molded center, having an elastomeric thread-like material wound around it, covered with either a thermoplastic or thermoset material. "Two-piece" balls typically have a spherical molded core covered with a thermoplastic material. "Multilayered" balls typically have a core and one or more intermediate layers or mantles between the core and a cover.

The material used to mold the three-piece centers and the two-piece and multi-layer cores has traditionally been a thermoset rubber such as polybutadiene rubber. There are, however, major disadvantages in using thermoset rubbers such as the inability to recycle scrap materials and the need for complex multi-step manufacturing processes. There has been only limited success in attempts to replace the thermoset materials with more-easily-processed thermoplastic materials, the scrap of which can be recycled.

Also, three-piece balls, two-piece balls, and multi-layered balls are by their very nature more complicated and costly to manufacture than the long sought after one-piece golf ball. Attempts to make a premium one-piece ball have heretofore not been successful. Limited-flight range balls, however, have been produced from thermoset rubber and from certain thermoplastic material as set forth in U.S. Patent No. 5,155,157.

U.K. Patent Application 2,164,342A describes one attempt to replace centers and cores and achieve a one-piece golf ball. It teaches moldable compositions comprising ionic copolymers (or potentially ionizable acid copolymers) blended with certain thermoplastic materials such as a polyether block copolyamide and copolyester. Those compositions are said to be useful as three-piece centers, two-piece cores and one-piece solid golf balls, but they lack properties such as durability. Also U.S. 5,155,157 describes a thermoplastic material for cores, centers and one-piece balls. The resins described in this patent can be molded into golf ball parts but the resulting balls are too hard and not resilient enough to perform as a premium golf ball and they are probably too expensive.

There still exists the need for a thermoplastic material that is resilient and durable enough with a low enough hardness or compression to be useful as a three-piece center, two-piece core, a one-piece golf ball, and in cores and mantles in a multi-layered golf ball in premium golf balls. Particularly, there is a need for such a material that is not too expensive.

### SUMMARY OF THE INVENTION

The subject invention provides thermoplastic compositions having high resilience, methods of manufacturing such compositions, and products made therefrom, such as components of one-, two- and three-piece golf balls or multi-layered golf balls, sport balls and footware.

More specifically, the thermoplastic composition of this invention comprises a composition comprising (a) a thermoplastic polymer selected from copolyetheresters, copolyetheramides, block styrene polydiene thermoplastic elastomers, elastomeric polyolefins, and thermoplastic polyurethanes; (b) a salt of a high molecular weight organic acid; (c) a filler (optionally present) and (d) an acid containing copolymer ionomer. Preferable ranges for components (a) through (d) are as set forth in the following table (percentages are the approximate weight percentages based on the total of the four components, (a) - (d); (d) is always present at a percentage needed to bring total of (a) through (d) to 100%):

| | (a) | (b) | (c) |
|---|---|---|---|
| 1 | 1-35% | 5-40% | 0-60% |
| 2 | 1-35% | 5-40% | Sufficient to raise density to 1.14 - 1.8 gms/cc |
| 3 | 1-30% | 10-30% | Sufficient to raise density to 1.14 - 1.22 gms/cc |
| 4 | 1-30% | 10-30% | 15-25% |
| 5 | 1-25% | 15-30% | 15-35% |
| 6 | 1-15% | 18-22% | 18-22% |
| 7 | 10-35% | 5-10% | Sufficient to raise density to 1.8 gms/cc |
| 8 | 10-35% | 5-10% | 40-60% |
| 9 | 25-35% | 5-10% | 40-55% |
| 10 | 28-35% | 5-10% | 50-55% |
| 11 | 1-35% | 5-30% | 0-60% |

One embodiment of a product using such composition is a one-piece golf ball comprising 1-30 weight percent (wt.%) thermoplastic, 10-30 wt.% salt of organic acid, sufficient filler, preferably 15-25 wt.%, to adjust density of ball to 1.14 grams/cubic centimeter (gm/cc), and the remainder to a total 100 wt.% ionomer. Preferably the filler has a density of about 4 gm/cc or greater.

Another embodiment of such a product is a two-piece golf ball having a core and a cover. The core is made of a composition comprising 1-30 wt.% thermoplastic, 10-30 wt.% salt of organic acid, sufficient filler, preferably 15-35 wt.%, to adjust the density of the core to 1.18 -1.22 gm/cc and the remainder to a total 100 wt.% ionomer. The amount of filler can be adjusted to produce a core with a density varying from the 1.18 gm/cc depending on the diameter of the core and the thickness and composition of the cover to produce a golf ball meeting the weight limits (45 grams) set by the PGA. Preferably the filler has a density of about 4 gm/cc or greater.

Another embodiment is a three-piece golf ball having a center, elastomeric wrapping and a cover. The center is made of a composition comprising 10-35 wt.% thermoplastic, 5-10 wt.% salt of organic acid, sufficient filler, preferably 40-60 wt.% to adjust the density of the center to about 1.8 gm/cc, and the remainder to a total 100 wt.% ionomer. As with the two-piece ball, the amount of filler can be adjusted depending on the size, thickness and composition of the other ball components to produce a golf ball weighing about 45 grams.

Another embodiment is a multi-layer golf ball having a core and a cover with one or more intermediate layers or mantles between the core and the cover. Both the core and the mantle(s) can comprise the composition of this invention. The amount of filler employed in the core and mantle(s) can be varied from 0 to about 60 wt.% depending on the size (thickness) of the components and the desired location of the weight in the ball, provided that the final ball meets the required weight limits. The filler can be used in the core and not in the mantle, in the mantle and not in the core, or in both. Thus, the mantle or the core can comprise about 1-35 wt.% thermoplastic, 5-30 wt.% salt of organic acid, sufficient filler, if needed, to adjust the density to the desired level and the remainder to 100 wt.% ionomer.

As will be appreciated by one skilled in the art, the present invention allows unique golf ball constructions, which are also the subject of this invention. For example, the weight of the golf ball can be distributed differently than in current golf balls. It is possible to have more weight near the surface of the ball or midway between the center and the surface with a lower density center. It is also possible with the thermoplastic composition of this invention as the core to mold a pattern such as dimples into the core. By doing so, it is possible to obtain a golf ball having a cover with a uniform thickness throughout in contrast to presently available golf balls which have covers that are thinner in the area of the dimples.

### BRIEF DESCRIPTION OF FIGURES

Figure 1 is a two-dimensional plot of Coefficients of Restitution for one-piece compression-molded golf balls of this invention as determined in an ECHIP study.
Figure 2 is a three-dimensional plot of the same information presented in Figure 1.
Figure 3 is a two-dimensional plot of Atti Compression of one-piece compression-molded golf balls of this invention as determined in an ECHIP study.
Figure 4 is a three-dimensional plot of the same information presented in Figure 3.

### DETAILED DESCRIPTION OF THE INVENTION

Because the species and relative ratios of the components used in the practice of the subject invention vary somewhat, particularly when considered based on the type of golf ball desired (i.e., one-piece, two-piece, three-piece or multi-layered ball), it is useful to first consider the components themselves.

All patents set forth herein are incorporated by reference.

### COMPONENT DESCRIPTIONS

In this disclosure, the term copolymer is used to refer to polymers containing two or more monomers. The term bipolymer or terpolymer refers to polymers containing only two or three monomers respectively. The phrase 'copolymer of various monomers' means a copolymer whose units are derived from the various monomers.

### Thermoplastic Polymer

The thermoplastic polymer component of the invention is selected from copolyetheresters, copolyetheramides, elastomeric polyolefins, styrene diene block copolymers and thermoplastic polyurethanes, these classes of polymers being well known in the art.

The copolyetheresters are discussed in detail in patents such as U.S. Patents 3,651,014; 3,766,146; and 3,763,109. They are comprised of a multiplicity of recurring long chain units and short chain units joined head-to-tail through ester linkages, the long chain units being represented by the formula 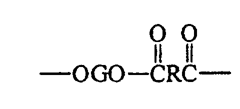 and the short chain units being represented by the formula 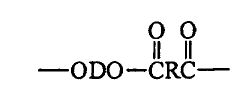 where G is a divalent radical remaining after the removal of terminal hydroxyl groups from a poly (alkylene oxide) glycol having a molecular weight of 400-6000 and a carbon to oxygen ratio of 2.0-4.3; R is a divalent radical remaining after removal of hydroxyl groups from a dicarboxylic acid having a molecular weight less than 300; and D is a divalent radical remaining after removal of hydroxyl groups from a diol having a molecular weight less than 250; provided said short chain ester units amount to 15-95 percent by weight of said copolyetherester. The preferred copolyetherester polymers are those where the polyether segment is obtained by polymerization of tetrahydrofuran and the polyester segment is obtained by polymerization of tetramethylene glycol and phthalic acid. Of course, the more polyether units incorporated into the copolyetherester, the softer the polymer. For purposes of the invention, the molar ether:ester ratio can vary from 90:10 to 10:90, preferably 80:20 to 60:40; and the shore D hardness is less than 70, preferably less than about 40.

The copolyetheramides are also well known in the art as described in U.S. 4,331,786, for example. They are comprised of a linear and regular chain of rigid polyamide segments and flexible polyether segments, as represented by the general formula 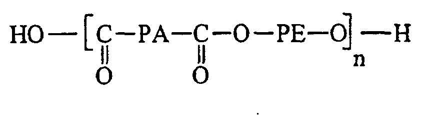 wherein PA is a linear saturated aliphatic polyamide sequence formed from a lactam or aminoacid having a hydrocarbon chain containing 4 to 14 carbon atoms or from an aliphatic C₆-C₉ diamine, in the presence of a chain-limiting aliphatic carboxylic diacid having 4-20 carbon atoms; said polyamide having an average molecular weight between 300 and 15,000; and PE is a polyoxyalkylene sequence formed from linear or branched aliphatic polyoxyalkylene glycols, mixtures thereof or copolyethers derived therefrom said polyoxyalkylene glycols having a molecular weight of less than or equal to 6000 and n indicates a sufficient number of repeating units so that said polyetheramide copolymer has an intrinsic viscosity of from about 0.8 to about 2.05. The preparation of these polyetheramides comprises the step of reacting a dicarboxylic polyamide, the COOH groups of which are located at the chain ends, with a polyoxyalkylene glycol hydroxylated at the chain ends, in the presence of a catalyst such as a tetra-alkyl ortho-titinate having the general formula Ti(OR)₄, wherein R is a linear branched aliphatic hydrocarbon radical having 1 to 24 carbon atoms. Again, the more polyether units incorporated into the copolyetheramide, the softer the polymer. The ether:amide ratios are as described above for the ether:ester ratios, as is the shore D hardness.

The elastomeric polyolefins are polymers composed of ethylene and higher primary olefins such as propylene, hexene, octene and optionally 1,4 - hexadiene and or ethylidene norbornene or norbomadiene. The elastomeric polyolefins can be functionalized with maleic anhydride.

Thermoplastic polyurethanes are linear or slightly chain branched polymers consisting of hard blocks and soft elastomeric blocks. They are produced by reacting soft hydroxy terminated elastomeric polyethers or polyesters with diisocynates such as methylene diisocynate (MDI) or toluene diisocynate(TDI). These polymers can be chain extended with glycols, diamines , diacids ,or amino alcohols. The reaction products of the isocynates and the alcohols are called urethanes and these blocks are relatively hard and high melting. These hard high melting blocks are responsible for the thermoplastic nature of the polyurethanes.

Block styrene diene copolymers are composed of polystrene units and polydiene units. The polydiene units are derived from polybutadiene, polyisoprene units or copolymers of these two. In the case of the copolymer it is possible to hydrogenate the polyolefin to give a saturated rubbery backbone segments. These materials are usually referred to as SBS, SIS or SEBS thermoplastic elastomers and they can also be functionalized with maleic anhydride.

### Salts of high-molecular-weight organic acid

The salt of organic acid of the present invention comprises the salts, particularly the barium, lithium , sodium, zinc, bismuth, chromium, cobalt, copper, potassium, strontium, titanium, tungsten, magnesium or calcium salts, of fatty acids, particularly stearic, behenic, erucic, oleic, linoelic, Preferalbly, the fatty acid salt is selected to have the lowest volatility. It is chosen so as to maximize COR while minimizing Atti Compression, which has often been called "PGA Compression" in the art.

### lonomer

The ionomers of this invention are prepared from 'direct' acid copolymers, that is to say copolymers polymerized by adding all monomers simultaneous, as distinct from a graft copolymer, where a monomer or other unit is grafted onto an existing polymer, often by a subsequent free radical reaction. Methods of preparing ionomers are well known, and are described in U.S. Patent No. 3,264,272 (Rees). Method of preparing the acid copolymers on which the ionomers are based is described in U.S. Patent No. 4,3451,931.

The acid copolymers are alpha olefin, particularly ethylene, C₃₋₈ α,β ethylenically unsaturated carboxylic acid, particularly acylic and methacrylic acid, copolymers. They may also contain a third softening monomer such as an alkyl acrylate or methacrylate. The ethylene acid copolymers can be described as an E/X/Y copolymers where E is ethylene, X is the α,β ethylenically unsaturated carboxylic acid, particularly acylic and methacrylic acid, and Y is a softening comonomer such as a C₁ TO C₈ alkyl acrylate or methacrylate ester. X is preferably present in 4-35 (preferably 6-35, most preferably 8-20) weight percent (wt.%) of the polymer, and Y is preferably present in 0-50 (preferably 5-25, most preferably 11-23) weight percent of the polymer.

The acid moiety in the acid copolymer is neutralized 1 to 100% (preferably at least 40 to about 100%, most preferably at least 90 to 100%) to form an ionomer by a cation such as lithium*, sodium*, potassium, magnesium*, calcium*, barium, lead, tin, zinc* or aluminum (*= preferred), or a combination of such cations.

Specific acid-containing ethylene copolymers include, ethylene/acrylic acid/n-butyl acrylate, ethylene/methacrylic acid/n-butyl acrylate, ethylene/methacrylic acid/iso-butyl acrylate, ethylene/acrylic acid/iso-butyl acrylate, ethylene/methacrylic acid/n-butyl methacrylate, ethylene/acrylic acid/methyl methacrylate, ethylene/acrylic acid/methyl acrylatel, ethylene/methacrylic acid/methyl acrylate, ethytene/ methacrylic acid/methyl methacrylate, and ethylene/acrylic acid/n-butyl methacrylate. Preferred acid-containing ethylene copolymers include, ethylene/methacrylic acid/n-butyl acrylate, ethylene/ acrylic acid/n-butyl acrylate, ethylene/methacrylic acid/methyl acrylate, ethylene/acrylic acid/ethyl acrylate, ethylene/methacrylic acid/ethyl acrylate, and ethylene/acrylic acid/ methyl acrylate copolymers. The most preferred acid-containing ethylene copolymers are, ethylene/(meth)acrylic acid/n-butyl acrylate, ethylene/(meth)acrylic acid/ethyl acrylate, and ethylene/(meth)acrylic acid/methyl acrylate copolymers.

It has been found that, by adding sufficient organic acid or salt of organic acid to the acid copolymer or ionomer, the ionomer can be neutralized without losing processability to a level above the level that would cause the ionomer alone to become non-melt-processable. That is to say that neutralization of the acid moieties in the acid copolymer from which the ionomer is made to greater than 90%, preferably about 100%, without losing the processability of the ionomer is accomplished by
(a) melt-blending an ethylene α,β ethylenically unsaturated carboxylic acid copolymer or a melt-processable ionomer thereof with an organic acid or a salt of organic acid, and
(b) adding a sufficient amount of a cation source to increase the level of neutralization all the acid moities (including those in the acid copolymer and in the organic acid) to greater than 90%, (preferably greater than 100%).

Thermoplastic polymer components selected from group consisting of copolyetheresters, copolyetheramides, elastomeric polyolefins, styrene diene block copolymers and thermoplastic polyurethanes, fillers and other ingredients, if included, can be blended in either before, during or after the acid moieties are neutralized to more than 90% or to about 100%. Preferably, fillers (particularly those that react with acid), thermoplastic elastomers and other ingredients are blended in after neutralization to the high level (greater than 90%, preferably about 100%.

### Filler

The optional filler component of the subject invention is chosen to impart additional density to blends of the previously described components, the selection being dependent upon the type of golf ball desired (i.e., one-piece, two-piece, three-piece or intermediate layer), as will be more fully detailed below. Generally, the filler will be inorganic having a density greater than about 4 gm/cc, preferably greater than 5 gm/cc, and will be present in amounts between 0 and about 60 wt.% based on the total weight of the composition. Examples of useful fillers include zinc oxide, barium sulfate, lead silicate and tungsten carbide, tin oxide, as well as the other well known corresponding salts and oxides thereof. It is preferred that the filler materials be non-reactive or almost non-reactive with the polymer components described above when the ionomers are less than completely neutralized. If the ionomers are fully neutralized, reactive fillers may be used. Zinc Oxide grades, such as Zinc Oxide, grade XX503R available from Zinc Corporation of America, that do not react with any free acid to cause cross-linking and a drop in MI are preferred, particularly when the ionomer is not fully neutralized.

### Other components

Additional optional additives useful in the practice of the subject invention include diacids such as adipic, sebacic or dodecane dioic acid or an acid copolymer wax (e.g., Allied wax AC143 believed to be an ethylene/16-18% acrylic acid copolymer with a number average molecular weight of 2,040) which assist in preventing reaction between the filler materials (such as reactive grades of ZnO) and the acid moiety in the ethylene copolymer. Other optional additives include TiO₂ which is used as a whitening agent or filler; optical brighteners; surfactants; processing aids.

### COMBINATIONS OF COMPONENTS

The specific combinations of components used in the practice of the subject invention will in large part be dependent upon the application. The preferred combinations for various types of golf balls (i.e., one-piece, two-piece, three-piece, or multi-layered), are as detailed below.

### Three-piece golf ball preferred embodiments

As used herein, the term "three-piece ball" refers to a golf ball comprising a center, a traditional elastomeric winding wound around the center, and a cover made from any traditional golf ball cover material such as Surlyn® ionomer resin, balata rubber or thermoset /thermoplastic polyurethanes. These three-piece golf balls are manufactured by well known techniques as described in U.S. 4,846,910 for example.

For purposes of this invention, the center of these three-piece balls is made by injection molding of the compositions of this invention. Those centers are placed in a winding machine in which the end of an elastomeric thread is affixed to the molded center and the thread is wound around the center to a predetermined thickness. A dimple-patterned cover is molded around the wound center.

The center is made of a composition comprising 10-35 wt.% (alternatively 25-35 wt.%, preferably 28-35 wt.%) thermoplastic selected from copolyetheramides. copolyetheresters, elastomeric polyolefins, styrenic diene block copolymers or thermoplastic polyurethanes, 5-30 wt.% salt of organic acid, sufficient filler, preferably 40-60 wt.% (alternatively 40-55 wt.% and most preferably 50-55 wt.%) to adjust the density of the center, preferably to about 1.8 gm/cc, so that the total golf ball weight meets specified limits and the remainder to a total 100 wt.% ionomer. The amount of filler (and hence the density of the center) can be adjusted depending on the size, thickness and composition of the other ball components to produce a golf ball weighing 45 - 46 grams (meet PGA standards).

The preferred thermoplastic component is a copolyetherester. The preferred salt of high molecular weight organic acid is metal salt of stearic, behenic, or erucic acid. The preferred acid-containing ethylene copolymer ionomer is an ethylene/methacrylic acid/normal butyl acrylate or ethylene/acrylic acid/normal butyl acrylate terpolymer.

A particularly preferred three piece golf ball comprises a center, an elastomeric winding and a cover wherein the center comprises (a) 10 to 35 wt.% a copolyetherester having a shore D hardness of 40, (b) 5 to 10 wt.% magnesium salt of stearic acid, (c) sufficient ZnO to adjust the density of the composition to about 1.8 gm/cc, and (d) the remainder to a total 100 wt.% of the components (a) through (d), ethylene/acrylate ester/acrylic acid (particularly 12% acid) copolymer highly neutralized with Mg cation.

### Two-piece golf ball preferred embodiments

As used herein, the term "two-piece ball" refers to a golf ball comprising a core made from the compositions of the invention, and a cover made from any traditional golf ball cover material as discussed above. These two-piece balls are manufactured by first molding the core from the compositions of the subject invention, positioning these preformed cores in an injection molding cavity using retractable pins, then injection molding the cover material around the core. Alternatively, covers can be produced by compression molding cover material over the cores.

The core is made of a composition comprising 1-30 wt.% (alternatively 1-25 wt.%, preferably 1-23 wt.%) thermoplastic, 10-30 wt.% (alternatively 15-30 wt.%, preferably 18-23 wt.%) salt of organic acid, sufficient filler, preferably 15-35 wt.% (preferably 18-23 wt.%), to adjust the density of the core, preferably to about 1.18 gm/cc, so that the total golf ball weight meets specified limits, and the remainder to a total 100 wt.% ionomer. The amount of filler can be adjusted to produce a core with a density varying from the 1.18 gm/cc depending on the diameter of the core and the thickness and composition of the cover to produce a golf ball meeting the weight limits (45.93 grams) set by the PGA. Preferably the filler has a density of about 4 gm/cc or greater, more preferably about 5 gm/cc or greater.

The most preferred thermoplastic component is a copolyetherester. The most preferred acid-containing ethylene copolymer ionomer is an ethylene /acrylic acid/n-butyl acrylate copolymer ionomer.

The two-piece ball that performs most satisfactorily, as seen in the Examples below, contains a core molded from a composition that comprises 10 -24 wt.% copolyetherester, 20 to 24 wt.% of the magnesium salt of stearic acid, 45-48 wt.% of an ethylenel(meth)acrylic/n-butyl acrylate highly neutralized with Mg cations to form the ionomer, and about 22.5% total weight percent ZnO.

A particularly preferred two-piece golf ball has a core density of about 1.18 gm/cc that comprises (a) thermoplastic polymer that is a polyetherester having a shore D hardness of about 40, (b) salt of the organic acid that is a salt of stearic acid; (c) filler that is selected from ZnO and BaSO₄, and (d) ionomer that is a partially neutralized ethylene/alkyl (meth)acrylate/(meth)acrylic acid copolymer. Preferably the salt of stearic acid is a magnesium salt, the ionomer is an ethylene/(meth)acrylic acid/n-butyl acrylate highly neutralized with Mg cations to form the ionomer, and the filler is ZnO.

A preferred two-piece golf ball comprises a thermoplastic core has a dimple pattern such that when positioned in the ball and covered by the cover having a dimple pattern, the cover thickness in the dimple areas is the about the same as the dimple thickness in the non-dimpled areas.

### One-piece golf ball preferred embodiments

As used herein, the term "one-piece ball" refers to a golf ball molded in toto from the compositions of the subject invention, i.e., not having elastomeric windings nor a cover. The one-piece molded ball will have a traditional dimple pattern and may be coated with a urethane lacquer or be painted for appearance purposes, but such a coating and/or painting will not affect the performance characteristics of the ball. These one-piece balls are manufactured by direct injection molding techniques or by compression molding techniques.

Preferably a one-piece golf ball comprises 1-30 wt.% (alternatively 1-25 wt.%, more preferably 10-23 wt.%) thermoplastic, 10-30 wt.% (alternatively 15-30 wt.%, more preferably 18-22 wt.% salt of organic acid, sufficient filler, preferably 15-25 wt.% (more preferably 18-22 wt.%), to adjust density of ball to 1.14 grams/cubic centimeter (gm/cc) or to a density that results in a golf ball that does not exceed the limitation on weight of golf ball set by the professional golf governing authority (PGA - 45.93 grams), and the remainder to a total 100 wt.% (c) ionomer. Preferably the filler has a density of about 4 gm/cc or greater, more preferably 5 gm/cc or greater. Density for larger balls (for example, 1.715 inches, 4.3561 cm) will be lower than the 1.14 gms/cc needed to produce a 45.93 gram standard size ball (1.68 inches, 4.2672 cm.). For larger balls, density can be as low as 1.05 gms/cc, for example.

Again, the most preferred thermoplastic component is a copolyetherester. The most preferred metal salt of an organic acid is magnesium stearate, magnesium laurate or magnesium salt of erucic acid. The most preferred acid-containing ethylene copolymer ionomer is an ethylene/acrylic acid/n-butyl acrylate copolymer almost totally neutralized with magnesium cations.

The one-piece balls that perform well, as seen in the Examples below, are molded from compositions of the subject invention comprising 5-35 wt.% of copolyetherester, 8.5-27 wt.% metal salt of organic acid, 29.5-50 wt.% ethylene/acrylic acid/n-butyl acrylate copolymer highly neutralized with Mg cations to form the ionomer, and about 18 wt.% ZnO.

A particulary preferred one-piece ball is one having (a) 1 to 35 wt.% polyethererester having a shore D hardness of about 40, (b) 5 to 40 wt.% magnesium salt of stearic acid, (c) sufficient zinc oxide in an amount up to 60 wt.% to adjust the density of the composition in a range of from 1.14 to 1.8 gm/cc to result in a golf ball meeting the weight limits set by the professional golf governing authority, and (d) the remainder to a total 100 wt.% of the components (a) through (d) of an ethylene/(meth)acrylic/n-butyl acrylate highly neutralized with Mg cations.

### Multi-Layer golf ball preferred embodiments

As used herein, the term "multi-layer ball" refers to a golf ball comprising a core, a cover made from any traditional golf ball cover material as discussed above, and one or more mantles between the core and the cover. These multi-layer balls are manufactured by first molding or making the core, typically compression or injection molding a mantle over the core and then compression or injection molding a cover over the mantle.

The multi-layer golf ball having a core and a cover with one or more intermediate layers or mantles between the core and the cover. Both the core and the mantle(s) can comprise the composition of this invention. The amount of filler employed in the core and mantle(s) can be varied from 0 to about 60 wt.% depending on the size (thickness) of the components and the desired location of the weight in the ball, provided that the final ball meets the required weight limits set by PGA (45-46 grams). The filler can be used in the core and not in the mantle, in the mantle and not in the core, or in both. Thus, the mantle or the core can comprise 1-35 wt.% thermoplastic, 5-30 wt.% salt of organic acid, sufficient filler to adjust the density to the desired level and the remainder to 100 wt.% ionomer. While not intending to be limiting as to possible combinations, this embodiment includes:
1. a core comprising the same composition used in the three-piece center with a mantle made of any composition known in the art,
2. a core comprising the same composition used in the two-piece core or three-piece center with a mantle made of the composition of this invention with or without filler (1-35 wt.% thermoplastic, 5-30 wt.% salt of organic acid, up to 60 wt.% filler (preferably up to 35 wt.%), and the remainder to 100 wt.% ionomer), the total filler in core and mantle adjusted to provide a golf ball of the desired weight, and
3. a core made of any composition (including thermoset compositions such as polybutadiene rubber) with a mantle made of the composition of this invention with or without filler provided that the weight of the finished golf ball meets the required limit.

### TESTING CRITERIA

In the Examples set out below, a number of testing criteria are utilized in the evaluation of golf ball performance: percent rebound, coefficient of restitution (COR) and compression.

Percent rebound is determined by dropping the ball (or three-piece center/two-piece core) from a height of 100 inches (254 cm) and measuring the rebound from a hard, rigid surface such as a thick steel plate or a stone block. An acceptable result is 65-85%.

COR is measured by firing a golf ball (or two piece core) from an air cannon at a velocity determined by the air pressure. The initial velocity generally employed is between 125 to 180 feet/second (38.1-54.86 m/sec). The ball strikes a steel plate positioned three feet away from the point where initial velocity is determined, and rebounds through a speed-monitoring device. The return velocity divided by the initial velocity is the COR. Acceptable results are .700 -.810 at 125 ft/sec (38.1 m/sec).

Compression is defined as the resistance to deformation of a golf ball, measured using an Atti machine. An acceptable result is about 70-120.

Numbers in parentheses in the tables represent the weight percentage of the component in the blend.

### TWO PIECE GOLF BALLS PRODUCED WITH THERMOPLASTIC CORES

These examples describe the preparation of blends for the core for two piece golf balls, golf balls made therefrom, and the properties of the cores and finished balls. The composition of these blends is shown in Table 2. The blends were made using extrusion conditions shown in Table 1A. The blends were molded into cores using conditions shown in Table 1B. The core is 1.53 inches (3.89 cm) in diameter. Balls were prepared by positioning preformed thermoplastic cores in an injection molding cavity. The cores were centrally positioned in the cavity by the use of retractable pins. A cover of mixed Surlyn® ionomer resin was then injection molded around the core. Properties of the resultant cores or balls are shown in Tables 2A and 2B.

**TABLE 1A**

| EXTRUSION CONDITIONS FOR TWO PIECE CORES | | | | | | |
|---|---|---|---|---|---|---|
| **Screw Speed Rpm** | **Zone 1 temp °C** | **Zone 2 temp °C** | **Zone 3 temp °C** | **die temp °C** | **Rate lb./hr.** | **vacuum inches** |
| 100-300 | 150-170 | 175-190 | 200-220 | 200-230 | 15-25 | 28 |
| | | | | | (6.8-11.34 Kg/hr) | (6.9 kPa) |

**TABLE 1B**

| MOLDING CONDITIONS FOR TWO-PIECE CORES | | |
|---|---|---|
| | | **Temp. °C** |
| | Rear | 162 |
| | Center | 176 |
| | Front | 176 |
| | Nozzle | 177 |
| | Mold Front/Back | 21/21 |
| | Melt | 199 |

| | | **Pressures Kg/cm**^{**2**} |
|---|---|---|
| | Injection 1^{st} Stage | 86 |
| | Injection 2^{nd} Stage | 82 |
| | Injection 3^{rd} Stage | 47 |

| | | **Cycle Times (sec)** |
|---|---|---|
| | Hold in 1^{st} Stage | 10 |
| | Hold in 2^{st} Stage | 40 |
| | Hold in 3^{st} Stage | 50 |
| | Cure Time | 20 |
| | Screw Retraction | 3.5 |
| Screw Speed | 150 RPM | |
| Back Pressure | 19 Kg/square cm. | |
| Mold Diameter | 4.01 cm | |
| *Prototype mold, limited cooling, two cavity | | |

**TABLE 2**

| CORE COMPOSITIONS | | | | |
|---|---|---|---|---|
| **Ex No.** | **Thermoplastic** | **Metal salt** | **lonomer** | **Filler** |
| 1 | H1 (15) | J (20) | B (47) | F3 (18) |
| 2 | H1 (10) | J (24) | B (48) | F3 (18) |
| 3 | H1 (15) | J (22) | B (45) | F3 (18) |
| (Percentages given in parenthesis) | | | | |
| B Ethylene, 17 % normal butyl acrylate, 12 % acrylic acid 60 % neutralized with magnesium ions | | | | |
| H1 Hytrel®3078 polyetherester block copolymer available from E. I. du Pont de Nemours and Company | | | | |
| F3 Zinc Oxide, grade XX503R available from Zinc Corporation of America. | | | | |
| J Magnesium stearate available from Witco Corporation | | | | |

**TABLE 2A**

| PROPERTIES of THERMOPLASTIC CORES | | | | |
|---|---|---|---|---|
| **Ex No.** | **M.I.** (g/10min) | **Atti Compression** | **Drop Rbn.** % | **COR** @ 125 ft/sec (38.1 m/sec) |
| 1 | 0.53 | 99 | 77 | .769 |
| 2 | 0.38 | 102 | 78.2 | .778 |
| 3 | 0.50 | 97 | 78.1 | .777 |

**TABLE 2B 2-PC.**

| BALL PROPERTIES MADE FROM CORES IN TABLE 2A | | | | |
|---|---|---|---|---|
| **Core** | **Cover** | **Weight grams** | **Atti Compression** | **COR** @125ft/sec (38.1 m/sec) |
| 1 | X | 44.5 | 112 | .799 |
| 2 | X | 43.9 | 114 | .806 |
| 3 | X | 44.1 | 113 | .808 |
| Control* | X | 45.2 | 108 | .789 |
| X - 50/50 blend of ethylene/19% methacrylic acid zinc ionomer about 36% neutralized and ethylene/19% methacrylic acid sodium ionomer 49% neutralized. | | | | |

| | | | | |
|---|---|---|---|---|
| *The control ball core is a Wilson Ultra polybutadiene core. | | | | |

It can be seen from data that thermoplastic cores give golf balls with a higher resilience then ball produced from the thermoset core.

### Examples of One-Piece Golf Balls

Thermoplastic blends of the materials in Table 4 were in general melt homogenized using a 3 inch (7.62 cm) electrically heated roll mill. The blends in examples 5d and 5h were produced by neutralizing the acid copolymer with magnesium 2,4 pentanedionate on a roll mill followed by the addition of the other ingredients. The resulting blends compression molded into one-piece balls had the properties shown in Table 4A.

**TABLE 4**

| ONE PIECE BALL COMPOSITIONS | | | | |
|---|---|---|---|---|
| **Ex No** | **Thermoplastic** | **lonomer** | **Metal salt** | **Filler** |
| 4a | H1(5) | B(50) | J(27) | F3 (18) |
| 4b | H1 (20) | B(44.5) | J(17.5) | F3 (18) |
| 4c | H1(35) | B(29.5) | J(17.5) | F3 (18) |
| 4d | H1(15) | B(47) | J(20) | F3 (18) |
| 4e | H1(15) | B(47) | K(20) | F3 (18) |
| 4f | H1(15) | B(47) | L(20) | F3 (18) |
| 4g | H1(15) | B(47) | M(20) | F3 (18) |
| 4h | H1(15) | B(47) | N(20) | F3 (18) |
| 4i | H1(15) | B(47) | O(20) | F3 (18) |
| 5a | H1(15) | B(47) | P(20) | F3 (18) |
| 5b | H1(15) | B(58.5) | Q(8.5) | F3 (18) |
| 5c | H1(15) | B(50) | Q(17) | F3 (18) |
| 5d | H1(15) | C(47) | J(20) | F3 (18) |
| 5e | G(15) | B(47) | J(20) | F3 (18) |
| 5f | H1(15) | B(47) | R(20) | F3 (18) |
| 5g | H1(15) | B(47) | S(20) | F3 (18) |
| 5h | H1(15) | B(47) | J(20) | F3 (18) |

Ingregients not previously identified are as follows:
- C.: Ethylene/20% ethyl acrylate/5% acrylic acid neutralized 60% with Mg.
- G.: Pebax®3533 which is a polyetheramide available from Elf ATO.
- K -: magnesium salt of behenic acid prepared by reacting magnesium acetate with behenic acid in an excess of acetic acid under reflux conditions, followed by removing the acetic acid by evaporation.
- L -: magnesium salt of oleic acid produced in a manner similar to that for K
- M -: sodium salt of Hoechst Wax S (a C₃₆ saturated wax extracted from brown coal).
- N -: calcium salt of Hoechst Wax S
- O -: lithium salt of Hoechst Wax S
- P -: magnesium salt of Hoechst Wax made from Hoechst S in the same manner as the other commercially unavailable salts (see K).
- Q -: magnesium salt of dodecanedioic acid made from the acid in manner similar to that for K.
- R -: magnesium salt of erucic acid made in a manner similar to that for K
- S -: magnesium salt of lauric acid prepared in a manner similar to that of K

**TABLE 4A**

| PROPERTIES OF ONE PIECE BALLS | | |
|---|---|---|
| **Ex No** | **Atti Compression** | **COR @ 125 ft/ sec.** (38.1 m/sec) |
| 4a | 89 | .781 |
| 4b | 77 | .764 |
| 4c | 65 | .767 |
| 4d | 79 | .771 |
| 4e | 81 | .749 |
| 4f | 69 | .763 |
| 4g | 108 | .733 |
| 4h | 108 | .725 |
| 41 | 108 | .703 |
| 5a | 102 | .705 |
| 5b | 85 | .675 |
| 5c | 101 | .662 |
| 5d | 51 | .731 |
| 5e | 72 | .772 |
| 5f | 52 | .769 |
| 5g | 76 | .782 |
| 5h | 56 | .772 |

### ECHIP DESIGNED EXPERIMENT TO OPTIMIZE COR AND ATTI COMPRESSION

Employing an "experimental design" protocol known as ECHIP®, a copyrighted product of Echip Inc., an experimental design was used to evaluate the effects of and interactions between magnesium stearate concentration, ionomer concentration and copolyetherester concentration to determine the effect on compression and coefficient of restitution for one-piece compression-molded golf balls of the three-component blend plus 18 wt.% ZnO to adjust density.

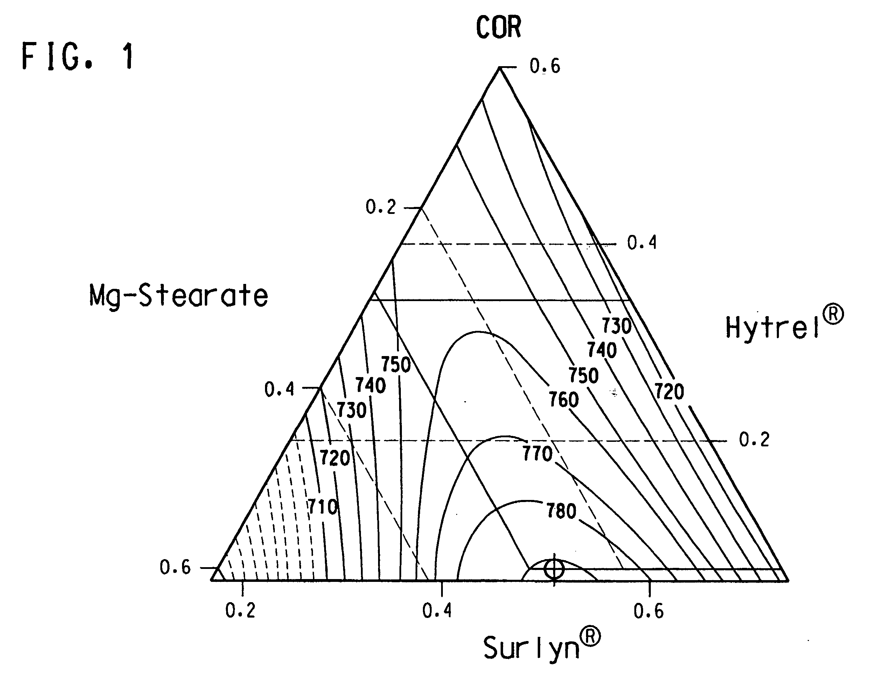

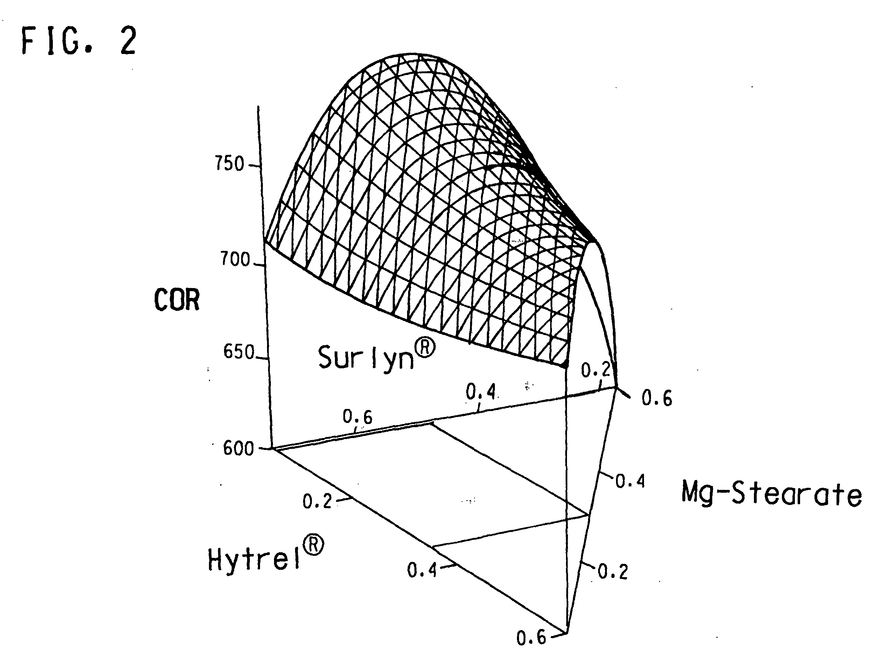

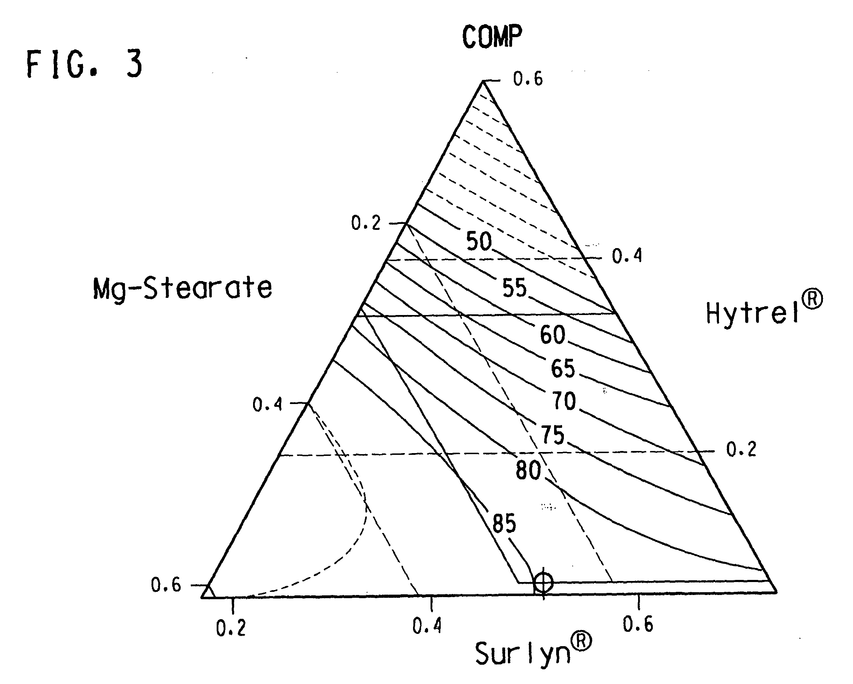

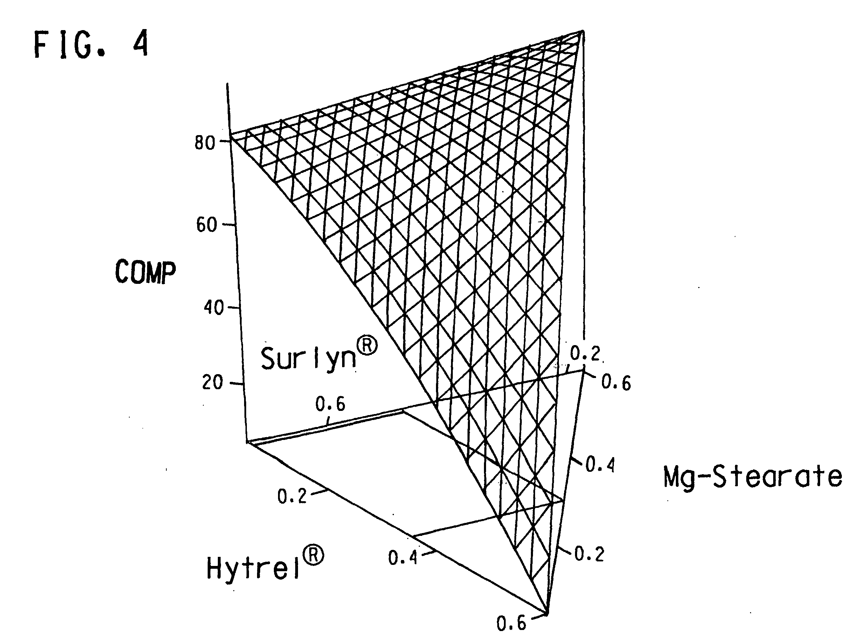

From the results displayed in Figures 1, 2, 3 and 4, compositions that exhibit preferred compression and coefficient of restitution can be predicted.

**TABLE 5**

| **Ex No.** | **% Hytrel H 1** | **% Mg Stearate J** | **% lonomer*** | **Atti comp.** | **COR** |
|---|---|---|---|---|---|
| 6a | 35 | 30% | 17 | 79 | .738 |
| 6b | 5 | 5 | 72 | 80 | .718 |
| 6c | 20 | 17.5 | 44.5 | 77 | .770 |
| 6d | 20 | 30 | 32 | 86 | .770 |
| 6e | 35 | 5 | 42 | 53 | .716 |
| 6f | 5 | 17.5 | 59-5 | 86 | .771 |
| 6g | 35 | 17.5 | 29.5 | 62 | .758 |
| 6h | 5 | 30 | 47 | 86 | .792 |
| 7a | 20 | 5 | 57 | 68 | .703 |
| 7b | 5 | 5 | 72 | 81 | .716 |
| 7c | 35 | 30 | 17 | 75 | .746 |
| 7d | 20 | 17.5 | 44.5 | 74 | .762 |
| 7e | 35 | 5 | 42 | 48 | .718 |
| 7f | 5 | 30 | 47 | 83 | .789 |
| Note: All samples contain 18% F3 as the zinc oxide filler to adjust for density. | | | | | |

| | | | | | |
|---|---|---|---|---|---|
| *E/12AA/17nBA neutralized to 60 % level with Mg cations. | | | | | |

### RETENTION OF COMPRESSION AND COR VALUES ON ANNEALING SAMPLES

Table 6A shows the results of annealing one piece golf ball formulations at 60°C for 48 hours. These results indicate that, unlike the ion-synergy observed in cover materials, the addition of a metal salt of an organic acid performs better if the ion in the organic acid and the ion in the ionomer are the same.

**TABLE 6**

| **Identification** | **Thermoplastic** | **Mg Stearate** | **lonomer %** |
|---|---|---|---|
| 8a | H1 (18) | 20 | B-1 (44) |
| 8b | H1 (20) | 20 | B-1 (42) |
| 9a | H1 (15) | 20 | B (47) |
| 9b | H1 (10) | 21 | B (50) |
| 9c | H1 (10) | 24 | B (48) |
| B-1 is the lithium ionomer produced from E/12AA/17nBA neutralized to 60 % level. | | | |

**TABLE 6A**

| | **Before Annealing** | | **After Annealing** | | | |
|---|---|---|---|---|---|---|
| **Ident** | **Atti Comp.** | **COR@ 125 ft/sec** | **Atti Comp.** | **COR @ 125 ft/sec** | **Delta Comp.** | **delta COR** |
| | | (38.1 m/sec) | | (38.1 m/sec) | | |
| 8a | 118 | .739 | 111 | .692 | - 7 | -.047 |
| 8b | 115 | .743 | 110 | .705 | - 5 | - .038 |
| 9a | 72 | .782 | 67 | .776 | - 5 | - .006 |
| 9b | 72 | .787 | 69 | .780 | - 3 | - .007 |
| 9c | 79 | .788 | 73 | .785 | - 6 | -.003 |

### CO-NEUTRALIZATION OF FATTY ACIDS AND ETHYLENE ACID COPOLYMERS

Neutralization of acid copolymers and fatty acids at the same time is advantageous as the materials can be neutralized to about 100% neutralization without losing the melt processability associated with ionomers neutralized to greater than 90%. In addition, neutralizing to about 100% reduces the deposits of the fatty acids on the mold vent observed upon molding mixtures with less than 100% neutralization.

Using a Werner & Pfleiderer twin screw extruder it was possible to neutralize the acid copolymer and the stearic acid (or any other fatty acid at the same time. Hence, 4812 grams of stearic acid were added to 7218 grams of an E/23nBA/9.6MAA polymer. Enough magnesium hydroxide (656.3 grams) was added to this mixture to neutralize 70 % of the available acid. The resulting ionomer/fatty acid salt blend had a melt index of 9.0 grams per 10 min (see Ex 17a table 7). Additionally, similar materials with 90 and > 95 % neutralization were prepared in a similar manner (see Ex 17b & 17c)

Two other resins with the composition cited in Table 7 were reacted with stearic acid and magnesium hydroxide. However, in this case, enough magnesium hydroxide was added to neutralize 100% of the available combined acids. These mixed anionic ionomers Ex 18a and 18b are listed in Table 7.

**TABLE 7**

| MAGNESIUM STEARATE MODIFIED MAGNESIUM IONOMERS | | | | | |
|---|---|---|---|---|---|
| **Ex No** | **Resin Comp.** | **Cation Type** | **Organic Acid (%)** | **% Neut** | **M.I.** |
| 17a | E/23nBA/9.6MAA | Mg | Stearic(40) | 70 | 9 |
| 17b | E/23nBA/9.6MAA | Mg | Stearic(40) | 90 | 5.2 |
| 17c | E/23nBA/9.6MAA | Mg | Stearic(40) | 95 | 3.6 |
| | | | | | |
| 18a | E/15nBA/8.5AA | Mg | Stearic(40) | >100 | 1.15 |
| 18b | E/16nBA/12AA | Mg | Stearic(40) | >100 | 0.09 |

Fifty five weight percent of each mixed anionic ionomer was salt and pepper blended with 45 weight percent of a Hytrel®3078/zinc oxide concentrate containing 50 % zinc oxide. Using a mixing screw on a 6 ounce injection molding machine, spheres 1.524 to 1.531 inches (3.87-3.89 cm) in diameter were molded using the conditions cited in Table 1 B. Cores were evaluated for Atti compression and for COR. Table 8 shows the results of these evaluations.

**TABLE 8**

| TWO PIECE CORES PRODUCED FROM SALT and PEPPER BLENDS of IONOMERS 17a-c and POLYETHERESTERS | | | | | | |
|---|---|---|---|---|---|---|
| **Ex No** | **Ionomer/ stearate** | **Hytrel®/ZnO Concentrate** | **M.l. of blend** | **COR@ 125 ft/sec** | **Atti Comp.** | **Density** |
| | | | | (38.1 m/sec) | | |
| 17aa | 17a(55%) | 45% | 1.95 | 0.752 | 103 | 1.16 |
| 17bb | 17b(55%) | 45% | 1.89 | 0.758 | 92 | 1.2 |
| 17cc | 17c(55%) | 45% | 1.49 | 0.759 | 98 | 1.18 |

Table 8A shows the results of cores made in the same fashion from the ionomer/stearate blends 18a and 18b.

**Table 8A**

| CORES PRODUCED FROM SALTY AND PEPPER BLENDS of IONOMERS 18a & 18b and POLYETHERESTERS | | | | | |
|---|---|---|---|---|---|
| **Ex No.** | **lonomer/ stearate** | **Hytrel®/ZnO Concentrate** | **COR@125 ft/sec** | **Compression** | **Density** |
| | | | (38.1 m/sec) | | |
| 18aa | 18a(55%) | 45% | 0.768 | 110 | 1.18 |
| 18bb | 18b(55%) | 45% | 0.782 | 108 | 1.19 |

### BLENDS OF FATTY ACID SALTS AND IONOMERS WITH ALTERNATIVE SOFT RESILIENT THERMOPLASTIC ELASTOMERS.

The polyetherester thermoplastic elastomer cited in Examples 1 through 18 can be replaced with a number of alternative soft resilient thermoplastic elastomers. In Examples 11aa through 16bb, we the see the results of the use of such blends in cores. All of the blends cited in Tables 9A and 9B were produced by extrusion compounding followed by injection molding. Parenthetical numbers are the weight percent of component in final blend. Conditions cited in Tables 1A and 1B were used to extrusion compound and injection mold for these examples.

**TABLE 9A**

| BLENDS OF IONOMERS, FATTY ACID SALTS AND ALTERNATIVE THERMOPLASTIC ELASTOMERS. | | | | | |
|---|---|---|---|---|---|
| **Ex No** | **lonomer** | **Fatty acid salt** | **Elastomer** | **Process Aid** | **Filler** |
| Control | AA(76.3) | none | None | FF(6.1) | F3(13.8)/EE(3.8) |
| 11-a | AA(55.3) | BB(8.3) | CC(19.3) | FF(4.4) | F3(9.9)/EE(2.8) |
| 12-a | GG(46.3) | BB(19.9) | CC(20.8) | II (0.5) | F3(10.2)/EE(2.3) |
| 12-b | GG(41.4)/HH(13.8) | BB(8.3) | CC(19.3) | FF(4.4) | F3(10)/EE(2.8) |
| 13-a | GG(47.2) | BB(20.6) | JJ(8.3) | None | F3(23.9) |
| 13-b | GG(47.2) | BB(20.6) | KK(8.3) | None | F3(23.9) |
| 13-c | GG(47.2) | BB(20.6) | H1(8.3) | None | F3(23.9) |
| 13-d | GG(47.2) | BB(20.6) | MM(8.3) | None | F3(23.9) |
| 13-e | GG(47.2) | BB(20.6) | NN(8.3) | None | F3(23.9) |
| control | GG(84.1) | none | None | None | F3(12.95)/EE(2.95) |
| 14-a | GG(50.0) | OO(21.5) | PP(15) | None | F3(11.0)/EE(2.5) |
| 14-b | GG(41.2) | OO(17.7) | PP(30) | None | F3(9.0)/EE(2.1) |
| 15-a | GG(19.8)/QQ(23) | OO(18.4) | TT(23) | None | F3(15.8) |
| control | GG(29.4)/RR(29.4) | OO(25.3) | None | None | F3(15.9) |
| 15-b | GG(19.8)/RR(23) | OO(18.4) | TT(23) | None | F3(15.8) |
| 15-c | GG(20)/RR(20) | OO(17.3) | TT(26.7) | None | F3(16) |
| 16-a | GG(20)/SS(24) | OO(16) | TT(16)/UU( 5) | None | F3(19) |
| 16-b | GG(20)/QQ(23) | OO(16) | TT(23) | None | F3(18) |

Ingregients not previously identified are as follows:
- AA -: E/23nBA/9.6 MAA neutralized to about 50 % with zinc cations available from E. I. du Pont de Nemours and Company as Surlyn®9320
- BB -: Calcium salt of stearic acid available from Witco Co.
- CC -: Nordel®2470 EPDM based on 70% ethylene, 24% propylene,5.95% 1,4- hexadiene and < .05% norbomadiene available from DuPont Dow Elastomers LLC.
- EE -: Titanium dioxide R960 available from E. I. du Pont de Nemours and Company
- FF-: Acid-containing ethylene copolymer wax consisting of 85% ethylene and 15% acrylic acid available from Allied Signal as AC143 wax
- GG-: E/23 nBA/9.6MAA neutralized to about 50% with magnesium cations available from E. I. du Pont de Nemours and Company as Surlyn®6320.
- HH-: Ethylene copolymer ionomer containing 85% ethylene and 15 % methacrylic acid neutralized about 56% with sodium cations and available from E. I. du Pont de Nemours and Company as Surlyn®8945
- II -: Adipic acid
- JJ: Engage®8180 grafted with 2% maleic anhydride and available from DuPont of Canada as Fusabond®493D
- KK: Nordel®IXP3745P grafted with 1.8% maleic anhydride available from DuPont of Canada as Fusabond®503D5
- MM -: An ethylene octene copolymer containing 40% octene produced with metallocene polymerization catalyst with a 0.5 melt index and a density of 0.863 g/cc. available from the DuPont Dow Elastomers LLC as Engage®8180
- NN -: EPDM elastomer containing 69% ethylene 30.5% propylene 0.5% norbomadiene.produced with a metallocene catalyst and available from DuPont Dow Elastomers LLC as Nordel®IPX3745P
- OO-: Magnesium Stearate available from Witco Co.
- PP -: Maleic anhydride grafted block ABA styrene ethylene butene copolymer available from Shell Chemicals and sold as Kraton®G1901.
- QQ -: Ethylene methacrylic acid copolymer containing 15% methacrylic neutralized about 55% with magnesium ions to an MI of 0.9, available from E. I. du Pont de Nemours and Company as Surlyn®6910.
- RR -: Ethylene acid copolymer containing 19 % methacrylic acid neutralized 37% with sodium ions, available from E. I. du Pont de Nemours and Company as Surlyn®8140.
- SS -: Ethylene acid copolymer containing copolymer containing 19% methacrylic acid 40% neutralized with magnesium ions to an MI of 1.1, available from E. I. du Pont de Nemours and Company as Surlyn®6120.
- TT -: EPDM elastomer containing 71 % ethylene 28.5% propylene,0.5% norbomene produced with a metallocene catalyst and available from DuPont Dow Elastomer LLC as Nordel®IPX3720P.
- UU -: Maleic anhydride grafted copolymer containing 0.9% maleic anhydride grafted on to an ethylene copolymer containing 30% propylene available from DuPont of Canada as Fusabond®MF416D

**TABLE 9B**

| RESULTS ON SPHERES MOLDED FROM COMPOSITIONS CITED IN TABLE 9A | | |
|---|---|---|
| **Ex No** | **Atti comp,** | **COR@125 ft/sec** |
| | | (38.1 m/sec) |
| control | 81 | 0.629 |
| 11-a | 83 | 0.709 |
| 12-a | 73 | 0.725 |
| 12-b | 91 | 0.715 |
| 13-a | 126 | 0.736 |
| 13-b | 119 | 0.738 |
| 13-c | 129 | 0.741 |
| 13-d | 124 | 0.741 |
| 13-e | 123 | 0.742 |
| control | 72 | 0.669 |
| 14-a | 67 | 0.740 |
| 14-b | 54 | 0.700 |
| 15-a | 95 | 0.735 |
| control | 140 | 0.743 |
| 15-b | 119 | 0.738 |
| 15-c | 108 | 0.719 |
| 16-a | 61 | 0.731 |
| 16-b | 95 | 0.735 |

## Claims

1. A composition comprising
1 to 35 wt.% component (a), a thermoplastic elastomer selected from copolyetheramides, copolyetheresters, elastomeric polyolefins, block polystyrene polydiene copolymers, and thermoplastic polyurethanes,
5 to 40 wt.% component (b), a salt of organic acid,
from 0 to 60 wt.% component (c), a filler, and
the remainder to a total 100 wt.% of the components (a) through (d) of component (d), an ionomer selected from alpha olefin, C₃₋₈ α,β ethylenically unsaturated carboxylic acid copolymers wherein 1 to 100% of the acid is neutralized by one or more cations.

2. The composition of claim 1 wherein component (c) is selected and in an amount sufficient to adjust the density of the composition to a range of from 1.14 to 1.8 gm/cc.

3. The composition of claim 2 wherein (a) is 1 to 30 wt.%, (b) is 10 to 30 wt.%, (c) is sufficient to adjust the density of the composition to a range of 1.14 to 1.22 gm/cc, and (d) is the remainder to a total 100 wt.% of the components (a) through (d).

4. The composition of claim 2 or 3 wherein the (c) has a density of 4 gm/cc or greater and is 15 to 25 wt.% of the total of components (a) through (d).

5. The composition of claim 2 or 3 wherein (a) is 1 to 25 wt.%, (b) is 15 to 30 wt.%, (c) has a density of at least 4 grams/cubic centimeter and is 15 to 35 wt.% and (d) is the remainder to a total 100 wt.% of the components (a) through (d).

6. The composition of claim 5 wherein (a) is 1 to 15 wt.%, (b) is 18 to 22 wt.%, (c) is 18 to 22 wt.%, and (d) is the remainder to a total 100 wt.% of the components (a) through (d).

7. The composition of claim 2 wherein (a) is 10 to 35 wt.%, (b) is 5 to 10 wt.%, (c) is sufficient to adjust the density of the composition to 1.8 gm/cc, and (d) is the remainder to a total 100 wt.% of the components (a) through (d).

8. The composition of claim 7 wherein (c) has a density of 4 gm/cc or greater and is 40 to 60 wt.% of the total of components (a) through (d).

9. The composition of claim 8 wherein (a) is 25 to 35 wt.%, (b) is 5 to 10 wt.%, (c) is 40 to 55 wt.%, and (d) is the remainder to a total 100 wt.% of the components a) through d).

10. The composition of claim 9 wherein (a) is 28 to 35 wt.%, (b) is 5 to 10 wt.%, (c) is 50 to 55 wt.%, and (d) is the remainder to a total 100 wt.% of the components a) through d).

11. A one-piece golf ball comprised of a composition selected from those of claim 2 wherein the filler is present in a sufficient amount to adjust the density of the composition to a level that results in a golf ball that weighs 45.93 grams.

12. The one-piece golf ball of claim 11 wherein (a) the thermoplastic polymer is a polyethererester having a shore D hardness of 40, (b) the salt of organic acid is a magnesium salt of stearic acid, (c) filler is ZnO, and (d) the ionomer is an ethylene/(meth)acrylic/n-butyl acrylate highly neutralized with Mg cations.

13. A two-piece golf ball comprised of a core and a cover wherein the core comprises a composition selected from those of claim 1 where the filler is sufficient to adjust the density of the core to 1.18 gm/cc.

14. The two-piece golf ball of claim 13 wherein the core comprises (a) thermoplastic polymer that is a polyetherester having a shore D hardness of 40, (b) salt of the organic acid that is a salt of stearic acid; (c) filler that is selected from ZnO and BaSO₄, and (d) the ionomer is a partially neutralized ethylene/alkyl (meth)acrylate/(meth)acrylic acid copolymer.

15. The two-piece golf ball of claim 14 wherein the salt of stearic acid is a magnesium salt, the ionomer is an ethylene/(meth)acrylic acid/n-butyl acrylate highly neutralized with Mg cations to form the ionomer, and the filler is ZnO.

16. The two-piece golf ball of claim 13 wherein the core has a dimple pattern such that when positioned in the ball and covered by the cover having a dimple pattern, the cover thickness in the dimple areas is about the same as the dimple thickness in the non-dimpled areas.

17. A three piece golf ball comprised of a center, an elastomeric winding and a cover wherein the center comprises a composition selected from those of claim 7.

18. The three-piece golf ball of claim 17 wherein (a) thermoplastic elastomer is a copolyetherester having a shore D hardness of 40, (b) metal salt of the organic acid is a magnesium salt of stearic acid, (c) filler is ZnO, and (d) ionomer is an ethylene/acrylate ester/acrylic acid (12%) copolymer highly neutralized with Mg cation.

19. A multi-layer golf ball having a core and a cover with one or more intermediate layers or mantles between the core and the cover, the core and the mantles being independently or both made from the compositions of claim 2 wherein the filler is sufficient to adjust the density of the core or mantle or both in which the composition is used to a level such that the golf ball has a density of 1.14 gms/cc.

20. The multi-layer golf ball of claim 19 wherein the mantle(s) and the core independently or both comprise 1 to 35 wt.% (a), 5 to 30 wt.%(b), up to 60 wt.%(c), and the remainder to 100 wt.% (d).

21. A process for making the thermoplastic elastomer composition of Claim 1 comprising the steps of
(a) melt-blending an ethylene α,β ethylenically unsaturated carboxylic acid copolymer or a melt-processable ionomer thereof with an organic acid or a salt of organic acid, and
(b) concurrently or subsequently to step (a) adding sufficient cation source to neutralize more than 90% of all the acid moities, and
(c) further blending In a thermoplastic polymer component selected from the group consisting of copolyetheresters, copolyetheramides, elastomeric polyolefins, styrene diene block copolymers and thermoplastic polyurethanes.

22. The process of claim 21 further comprising blending In a filler.

23. The process of claim 21 wherein the thermoplastic polymer component is added after neutralization to greater than 90%.

24. The process of claim 22 wherein the filler is not reactive with add moieties.

25. The process of claim 22 wherein the filler is added after neutralization to greater than 90%.

## Patentansprüche

1. Zusammensetzung, welche enthält:
1 bis 35 Gew.-% einer Komponente (a), ein thermoplastisches Elastomer, ausgewählt unter den Copolyetheramiden, Copolyetherestern, elastomeren Polyolefinen, Blockpolystyrolpolydiencopolymeren und unter den thermoplastischen Polyurethanen,
5 bis 40 Gew.-% einer Komponente (b), ein Salz einer organischen Säure,
von 0 bis 60 Gew.-% einer Komponente (c), ein Füllmittel, und
den Rest bis zu einer gesamten Menge von 100 Gew.-% aus den Komponenten (a) bis (d) von einer Komponente (d), ein Ionomer, ausgewählt unter einem Alphaolefin, C₃₋₈ α,β ethylenisch ungesättigten Carboxylsäurecopolymeren, wobei 1 bis 100% der Säure durch ein oder durch mehrere Kationen neutralisiert werden.

2. Zusammensetzung gemäß Anspruch 1, bei welcher die Komponente (c) ausgewählt wird und in einer Menge vorliegt, welche groß genug ist, um die Dichte der Zusammensetzung auf einen Bereich von 1,14 bis 1,8 g/cm³ anzupassen.

3. Zusammensetzung gemäß Anspruch 2, bei welcher (a) 1 bis 30 Gew.-% beträgt, (b) 10 bis 30 Gew.-% beträgt, (c) groß genug ist, um die Dichte der Zusammensetzung auf einen Bereich von 1,14 bis 1,22 g/cm³ anzupassen, und (d) den Rest bis zu einer gesamten Menge von 100 Gew.-% der Komponenten (a) bis (d) ausmacht.

4. Zusammensetzung gemäß Anspruch 2 oder 3, bei welcher die Komponente (c) eine Dichte von 4 g/cm³ oder höher aufweist und 15 bis 25 Gew.-% der gesamten Menge der Komponenten (a) bis (d) ausmacht.

5. Zusammensetzung gemäß Anspruch 2 oder 3, bei welcher (a) 1 bis 25 Gew.-% beträgt, (b) 15 bis 30 Gew.-% beträgt, (c) eine Dichte von mindestens von 4 g/cm³ aufweist und 15 bis 35 Gew.-% beträgt und (d) den Rest bis zu einer gesamten Menge von 100 Gew.-% der Komponenten (a) bis (d) ausmacht.

6. Zusammensetzung gemäß Anspruch 5, bei welcher (a) 1 bis 15 Gew.-% beträgt, (b) 18 bis 22 Gew.-% beträgt, (c) 18 bis 22 Gew.-% beträgt und (d) den Rest bis zu einer gesamten Menge von 100 Gew.-% der Komponenten (a) bis (d) ausmacht.

7. Zusammensetzung gemäß Anspruch 2, bei welcher (a) 10 bis 35 Gew.-% beträgt, (b) 5 bis 10 Gew.-% beträgt, (c) groß genug ist, um die Dichte der Zusammensetzung auf 1,8 g/cm³ anzupassen, und (d) den Rest bis zu einer gesamten Menge von 100 Gew.-% der Komponenten (a) bis (d) ausmacht.

8. Zusammensetzung gemäß Anspruch 7, bei welcher die Komponente (c) eine Dichte von 4 g/cm³ oder höher aufweist und 40 bis 60 Gew.-% der gesamten Menge der Komponenten (a) bis (d) ausmacht.

9. Zusammensetzung gemäß Anspruch 8, bei welcher (a) 25 bis 35 Gew.-% beträgt, (b) 5 bis 10 Gew.-% beträgt, (c) 40 bis 55 Gew.-% beträgt und (d) den Rest bis zu einer gesamten Menge von 100 Gew.-% der Komponenten a) bis d) ausmacht.

10. Zusammensetzung gemäß Anspruch 9, bei welcher (a) 28 bis 35 Gew.-% beträgt, (b) 5 bis 10 Gew.-% beträgt, (c) 50 bis 55 Gew.-% beträgt und (d) den Rest bis zu einer gesamten Menge von 100 Gew.-% der Komponenten a) bis d) ausmacht.

11. Aus einem Stück bestehender Golfball, welcher aus einer Zusammensetzung besteht, welche unter jenen gemäß Anspruch 2 ausgewählt ist, wobei das Füllmittel in einer Menge vorhanden ist, welche groß genug ist, um die Dichte der Zusammensetzung bis auf ein Niveau einzustellen, das zu einem Golfball führt, welcher ein Gewicht von 45,93 Gramm aufweist.

12. Aus einem Stück bestehender Golfball gemäß Anspruch 11, bei welchem (a) das thermoplastische Polymer ein Polyetherester ist mit einer Shore D Härte von 40 ist, (b) das Salz der organischen Säure ein Magnesiumsalz der Stearinsäure ist, (c) das Füllmittel ZnO ist und (d) das Ionomer ein Ethylen/(meth)acryl/n-Butylacrylat ist, welches bis zu einem hohen Grad mit Mg Kationen neutralisiert ist.

13. Aus zwei Stücken bestehender Golfball, welcher aus einem Kern und einer Ummantelung besteht, wobei der Kern aus einer Zusammensetzung besteht, welche aus jenen gemäß Anspruch 1 ausgewählt ist, wobei das Füllmittel in einer Menge vorhanden ist, welche groß genug ist, um die Dichte des Kerns auf 1,18 g/cm³ einzustellen.

14. Aus zwei Stücken bestehender Golfball gemäß Anspruch 13, bei welchem der Kern enthält (a) ein thermoplastisches Polymer, welches ein Polyetherester ist mit einer Shore D Härte von 40, (b) ein Salz der organischen Säure, welches ein Salz der Stearinsäure ist; (c) ein Füllmittel, welches ausgewählt wird unter ZnO und BaSO₄ und (d) das Ionomer, welches ein teilweise neutralisiertes Ethylen/Alkyl(meth)acrylat/(Meth)acrylsäure-copolymer ist.

15. Aus zwei Stücken bestehender Golfball gemäß Anspruch 14, bei welchem das Salz der Stearinsäure aus einem Magnesiumsalz besteht, das Ionomer ein Ethylen/(meth)acrylsäure/n-Butylacrylat ist, welches bis zu einem hohen Grad mit Mg Kationen neutralisiert ist, um das Ionomer zu bilden, und das Füllmittel aus ZnO besteht.

16. Aus zwei Stücken bestehender Golfball gemäß Anspruch 13, bei welchem der Kern ein Muster mit leichten Vertiefungen aufweist, so dass wenn der Kern in dem Ball angeordnet ist und von der Ummantelung mit einem Muster mit leichten Vertiefungen umschlossen ist, die Dicke der Ummantelung in den Bereichen der Vertiefungen in etwa dieselbe ist wie die Dicke der Vertiefungen in den Bereichen ohne Vertiefungen.

17. Aus drei Stücken bestehender Golfball, welcher aus einem Zentrum, einer elastomeren Windung und einer Ummantelung. besteht, wobei das Zentrum eine Zusammensetzung enthält, welche unter jenen gemäß Anspruch 7 ausgewählt ist.

18. Aus drei Stücken bestehender Golfball gemäß Anspruch 17, bei welchem (a) das thermoplastische Elastomer ein Copolyetherester ist mit einer Shore D Härte von 40, (b) das Metallsalz der organischen Säure ein Magnesiumsalz der Stearinsäure ist; (c) das Füllmittel aus ZnO besteht und (d) das Ionomer ein Ethylen/Acrylatester/Acrylsäure (12%)-copolymer ist, welches bis zu einem hohen Grad mit Mg Kationen neutralisiert ist.

19. Mehrschichtiger Golfball mit einem Kern und mit einer Ummantelung mit einer oder mit mehreren Zwischenschichten oder Zwischenmantellagen zwischen dem Kern und der Ummantelung, wobei der Kern und die Mantellagen unabhängig voneinander oder beide aus den Zusammensetzungen gemäß Anspruch 2 hergestellt sind, wobei das Füllmittel in einer ausreichend großen Menge vorhanden ist, um die Dichte des Kerns oder der Ummantelung oder der beiden, in denen die Zusammensetzung verwendet ist, bis auf ein solches Niveau einzustellen, dass der Golfball eine Dichte von 1,14 g/cm³ aufweist.

20. Mehrschichtiger Golfball gemäß Anspruch 19, bei welchem die Ummantelung(en) und der Kern unabhängig voneinander oder beide 1 bis 35 Gew.-% (a), 5 bis 30 Gew.-% (b), bis zu 60 Gew.-% (c) und den Rest bis zu 100 Gew.-% (d) enthalten.

21. Verfahren zur Herstellung der Zusammensetzung des thermoplastischen Elastomers gemäß Anspruch 1, welches die folgenden Verfahrensschritte umfasst:
(a) ein Schrnelzmischen eines α,β ethylenisch ungesättigten Carboxylsäurecopolymers oder eines in der Schmelze verarbeitungsfähigen Ionomers desselben mit einer organischen Säure oder einem Salz einer organischen Säure, und
(b) gleichzeitig oder anschließend auf den Schritt (a), ein Hinzugeben einer ausreichend großen Menge einer Katioaenquelle, um mehr als 90% von allen Säureanteilen zu neutralisieren, und
(c) ein weiteres Hinzumischen einer thermoplastischen Polymerkomponente, ausgewählt aus der Gruppe bestehend aus Copolyetherestern, Copolyetheramiden, elastomeren Polyolefinen, Styroldienblockcopolymeren und thermoplastischen Polyurethanen.

22. Verfahren gemäß Anspruch 21, welches weiterhin das Hinzumischen eines Füllmittels umfasst.

23. , Verfahren gemäß Anspruch 21, bei welchem die thermoplastische Polymerkomponente hinzugefügt wird nach einer Neutralisation bis auf mehr als 90%.

24. Verfahren gemäß Anspruch 22, bei welchem das Füllmittel nicht reaktiv mit den Säureanteilen ist.

25. Verfahren gemäß Anspruch 22, bei welchem das Füllmittel hinzugefügt wird nach einer Neutralisation bis auf mehr als 90%.

## Revendications

1. Composition comprenant:
de 1 à 35% en poids d'un composant (a), un élastomère thermoplastique choisi parmi des copolyétheramides, des copolyétheresters, des polyoléfines élastomères, des copolymères blocs de polystyrène et de polydiène et des polyuréthanes thermoplastiques,
de 5 à 40% en poids d'un composant (b), un sel d'un acide organique,
de 0 à 60% en poids d'un composant (c), une charge, et
le reste jusqu'à un total de 100% en poids des composants (a) à (d) d'un composant (d), un ionomère choisi parmi une alpha-oléfine, des copolymères d'acides carboxyliques C₃₋₈ α,β-éthyléniquement insaturés dans lesquels de 1 à 100% de l'acide est neutralisé par un ou plusieurs cations.

2. Composition suivant la revendication 1, dans laquelle le composant (c) est choisi et dans une quantité suffisante pour ajuster la densité de la composition à un intervalle de 1,14 à 1,8 g/cm³.

3. Composition suivant la revendication 2, dans laquelle (a) est de 1 à 30% en poids, (b) est de 10 à 30% en poids, (c) est suffisant pour ajuster la densité de la composition à un intervalle de 1,14 à 1,22 g/cm³ et (d) est le reste jusqu'à un total de 100% en poids des composants (a) à (d).

4. Composition suivant la revendication 2 ou 3, dans laquelle (c) présente une densité de 4 g/cm³ ou plus et il est de 15 à 25% en poids du total des composants (a) à (d).

5. Composition suivant la revendication 2 ou 3, dans laquelle (a) est de 1 à 25% en poids, (b) est de 15 à 30% en poids, (c) présente une densité d'au moins 4 grammes/centimètre cube et il est de 15 à 35% en poids et (d) est le reste jusqu'à un total de 100% en poids des composants (a) à (d).

6. Composition suivant la revendication 5, dans laquelle (a) est de 1 à 15% en poids, (b) est de 18 à 22% en poids, (c) est de 18 à 22% en poids et (d) est le reste jusqu'à un total de 100% en poids des composants (a) à (d).

7. Composition suivant la revendication 2, dans laquelle (a) est de 10 à 35% en poids, (b) est de 5 à 10% en poids, (c) est suffisant pour ajuster la densité de la composition à 1,8 g/cm³ et (d) est le reste jusqu'à un total de 100% en poids des composants (a) à (d).

8. Composition suivant la revendication 7, dans laquelle (c) présente une densité de 4 g/cm³ ou plus et il est de 40 à 60% en poids du total des composants (a) à (d).

9. Composition suivant la revendication 8, dans laquelle (a) est de 25 à 35% en poids, (b) est de 5 à 10% en poids, (c) est de 40 à 55% en poids et (d) est le reste jusqu'à un total de 100% en poids des composants (a) à (d).

10. Composition suivant la revendication 9, dans laquelle (a) est de 28 à 35% en poids, (b) est de 5 à 10% en poids, (c) est de 50 à 55% en poids et (d) est le reste jusqu'à un total de 100% en poids des composants (a) à (d).

11. Balle de golf en une pièce constituée d'une composition choisie parmi celles de la revendication 2 dans laquelle la charge est présente dans une quantité suffisante pour ajuster la densité de la composition à un niveau qui conduit à une balle de golf pesant 45,93 grammes.

12. Balle de golf en une pièce suivant la revendication 11, dans laquelle (a), le polymère thermoplastique, est un polyétherester possédant une dureté Shore D de 40, (b), le sel d'un acide organique, est un sel de magnésium d'acide stéarique, (c), la charge, est ZnO et (d), l'ionomère, est un éthylène!(méth)acrylique/acrylate de n-butyle hautement neutralisé avec des cations Mg.

13. Balle de golf en deux pièces constituée d'un coeur et d'une enveloppe, dans laquelle le coeur comprend une composition choisie parmi celles de la revendication 1 où la charge est suffisante pour ajuster la densité du coeur à 1,18 g/cm³.

14. Balle de golf en deux pièces suivant la revendication 13, dans laquelle le coeur comprend (a), le polymère thermoplastique, qui est un polyétherester possédant une dureté Shore D de 40, (b), le sel d'un acide organique, qui est un sel d'acide stéarique, (c), la charge, qui est choisie parmi ZnO et BaSO₄ et (d), l'ionomère, est un copolymère d'éthylène/(méth)acrylate d'alkyle/acide (méth)acrylique partiellement neutralisé.

15. Balle de golf en deux pièces suivant la revendication 14, dans laquelle le sel d'acide stéarique est un sel de magnésium, l'ionomère est un éthylène/acide (méth)acrylique/acrylate de n-butyle hautement neutralisé avec des cations Mg pour former l'ionomère et la charge est ZnO.

16. Balle de golf en deux pièces suivant la revendication 13, dans laquelle le coeur possède un dessin de bosses de sorte que, lorsqu'il est positionné dans la balle et couvert par l'enveloppe avec un dessin de bosses, l'épaisseur de l'enveloppe dans les zones de bosses est environ la même que l'épaisseur des bosses dans les zones non bosselées.

17. Balle de golf en trois pièces constituée d'un centre, d'un enroulement élastomère et d'une enveloppe dans laquelle le centre comprend une composition choisie parmi celles de la revendication 7.

18. Balle de golf en trois pièces suivant la revendication 17, dans laquelle (a), l'élastomère thermoplastique, est un copolyétherester possédant une dureté Shore D de 40, (b), le sel métallique de l'acide organique, est un sel de magnésium d'acide stéarique, (c), la charge, est ZnO et (d), l'ionomère, est un copolymère d'éthylène/ester d'acrylate/acide acrylique (12%) hautement neutralisé avec des cations Mg.

19. Balle de golf multicouche possédant un coeur et une enveloppe avec une ou plusieurs couches ou manteaux intermédiaires entre le coeur et l'enveloppe, le coeur et les manteaux étant indépendamment ou ensemble fabriqués à partir des compositions de la revendication 2, où la charge est suffisante pour ajuster la densité du coeur ou du manteau ou des deux, où la composition est utilisée à un niveau de sorte que la balle de golf présente une densité de 1,14 g/cm³.

20. Balle de golf multicouche suivant la revendication 19, dans laquelle le ou les manteaux et le coeur comprennent indépendamment ou ensemble de 1 à 35% en poids de (a), de 5 à 30% en poids de (b), jusqu'à 60% en poids de (c) et le reste jusqu'à 100% en poids de (d).

21. Procédé pour la fabrication de la composition d'élastomère thermoplastique suivant la revendication 1, comprenant les étapes:
(a) de mélange à l'état fondu d'un copolymère d'éthylène et d'acide carboxylique α,β-éthyléniquement insaturé ou d'un ionomère pouvant être traité à l'état fondu de celui-ci avec un acide organique ou un sel d'un acide organique, et
(b) concurremment à ou à la suite de l'étape (a), d'ajout d'une source de cations suffisante pour neutraliser plus de 90% de la totalité des fractions acides, et
(c) d'incorporation en outre d'un composant de polymère thermoplastique choisi dans le groupe constitué de copolyétheresters, de copolyétheramides, de polyoléfines élastomères, de copolymères blocs de styrène et de diène et de polyuréthanes thermoplastiques.

22. Procédé suivant la revendication 21, comprenant en outre l'incorporation d'une charge.

23. Procédé suivant la revendication 21, dans lequel le composant de polymère thermoplastique est ajouté après une neutralisation à plus de 90%.

24. Procédé suivant la revendication 22, dans lequel la charge n'est pas réactive avec des fractions acides.

25. Procédé suivant la revendication 22, dans lequel la charge est ajoutée après une neutralisation à plus de 90%.
